# EUROPÄISCHE PATENTANMELDUNG

(11) **EP 3 287 618 A1**
(43) Veröffentlichungstag der Anmeldung: **28.02.2018**
(21) Anmeldenummer: 17163045.2
(22) Anmeldetag: 27.03.2017
(51) Int. Cl.: F02B 37/10, B60R 16/00, F02M 35/16

(54) **LANDWIRTSCHAFTLICHE ARBEITSMASCHINE MIT TURBOLADER**

(30) Priorität: 23.08.2016 DE 102016115588
(71) Anmelder: CLAAS Tractor S.A.S., 78141 Vélizy-Villacoublay Cedex (FR)
(72) Erfinder: Renaud, Jeremy, 27310 Bourg Achard (FR); Hammar, Adberrahmane, 75015 Paris (FR); Benallal, Mohammed, 92330 Sceaux (FR)
(74) Vertreter: Budach, Steffen

(57) **Zusammenfassung**

Eine landwirtschaftliche Arbeitsmaschine (10) umfasst einen Verbrennungsmotor (16), einen dem Verbrennungsmotor (16) zugeordneten Turbolader (30) mit einer Turbine (32) und einem Verdichter (34), welche über eine Turbowelle (56) drehbar miteinander verbunden sind, wobei die Turbine (32) durch einen Abgasstrom (42) des Verbrennungsmotors (16) antreibbar ist, und wobei durch den Verdichter (34) verdichtete Ladeluft (46) für den Verbrennungsmotor (16) bereitstellbar ist. Gemäß der Erfindung weist der Turbolader (30) einen Elektromotor (36) auf, welcher als Antrieb und/oder Generator des Turboladers (30) betreibbar ist.

## Beschreibung

Die Erfindung betrifft eine landwirtschaftliche Arbeitsmaschine mit einem Verbrennungsmotor und einem diesem zugeordneten Turbolader gemäß dem Oberbegriff des Anspruchs 1.

Landwirtschaftliche Arbeitsmaschinen wie Traktoren oder selbstfahrende Erntemaschinen benötigen für die zur verrichtenden Arbeiten oftmals eine hohe Leistung und weisen daher üblicherweise Verbrennungsmotoren mit entsprechend dimensionierter Leistung auf. Die Verbrennungsmotoren sind dabei üblicherweise mit einem Turbolader ausgerüstet, welche eine durch einen Abgasstrom des Verbrennungsmotors angetriebene Turbine aufweisen, durch die ein Verdichter zum Verdichten einer Ladeluft des Verbrennungsmotors angetrieben wird. Um einen Verbrauch an Kraftstoff des Verbrennungsmotors zu reduzieren, wird mittels einer sogenannten Motordrückung oftmals versucht, den Verbrennungsmotor mit möglichst niedrigen Drehzahlen zu betreiben, um hierdurch Kraftstoff einsparen zu können. Gerade bei niedrigen Drehzahlen ist jedoch das Ansprechverhalten eines Turboladers träge, dies wird auch als Turboloch bezeichnet, und führt zu einem langsamen Ansprechverhalten des Verbrennungsmotors wenn eine höhere Belastung abgerufen wird. Zudem weisen Turbolader üblicherweise ein sogenanntes Überströmventil auf, über welches besonders bei einer hohen Motorauslastung und einem damit verbundenen sehr hohen Abgasstrom, ein Großteil des Abgasstromes ungenutzt an der Turbine vorbeigeleitet und dem Auspuff zugeführt wird. Die hierbei an der Turbine vorbeigeleitete Abgasmenge und die darin enthaltene Energie geht somit verloren.

Aus der US 8,522,757 B2 ist ein Verbrennungsmotor bekannt, welcher eine Nutzung des Abgasstroms des Verbrennungsmotors in Verbindung mit mehreren, aufwendig angeordneten Turboladern offenbart. Hierbei wird nach der letzten Turbine der Abgasstrom über eine mit einem Generator verbundene Turbine geleitet, so dass eine verbleibende Restenergie des Abgases genutzt und in elektrische Energie gewandelt werden kann. Nachteilig ist hierbei jedoch, dass neben der aufwendigen Bauform mit mehreren Turboladern lediglich eine Energierückgewinnung aus dem Abgasstrom erfolgt.

Es ist daher die Aufgabe der vorliegenden Erfindung, eine landwirtschaftliche Arbeitsmaschine bereitzustellen, welche einen effizienteren Betrieb eines Verbrennungsmotors der Arbeitsmaschine ermöglicht und im Hinblick auf den verfügbaren Bauraum eine platzsparende und gewichtssparendere Ausgestaltung ermöglicht.

Die Lösung der Aufgabe erfolgt erfindungsgemäß durch die kennzeichnenden Merkmale des Anspruchs 1. Vorteilhafte Ausgestaltungen der Erfindung sind in den Unteransprüchen angegeben.

Eine landwirtschaftliche Arbeitsmaschine umfasst einen Verbrennungsmotor, einen dem Verbrennungsmotor zugeordneten Turbolader mit einer Turbine und einem Verdichter, welche über eine Turbowelle drehbar miteinander verbunden sind, wobei die Turbine durch einen Abgasstrom des Verbrennungsmotors antreibbar ist und wobei durch den Verdichter verdichtete Ladeluft für den Verbrennungsmotor bereitstellbar ist. Gemäß der Erfindung weist der Turbolader einen Elektromotor auf, welcher als Antrieb und/oder Generator des Turboladers betreibbar ist. Durch die Verbindung der Turbine mit dem Elektromotor kann Energie aus dem Abgasstrom, über welchen die Turbine angetrieben wird, mittels des als Generator wirkenden Elektromotors in elektrische Energie gewandelt und genutzt werden. Darüber hinaus hat die Verbindung des Elektromotors mit dem Verdichter den Vorteil, dass unabhängig von einem Abgasstrom des Verbrennungsmotors verdichtete Ladeluft für den Verbrennungsmotor entsprechend der benötigten Leistung bereitgestellt werden kann. Dies ermöglicht einen effizienteren Betrieb des Verbrennungsmotors, zum einen durch die Energierückgewinnung aus dem Abgasstrom und zum anderen durch die Bereitstellung von verdichteter Ladeluft je nach Betriebszustand und benötigter Motorlast. Darüber hinaus kann durch den Elektromotor in Verbindung mit dem Verdichter das sogenannte Turboloch und eine Trägheit des Turboladers überwunden und damit vermieden werden. Hierbei ermöglicht die Anordnung des Elektromotors an dem Turbolader in Verbindung mit der Turbine und dem Verdichter eine bauraumsparende kompakte Bauweise des Turboladers.

In einer bevorzugten Ausgestaltung der Erfindung ist der Elektromotor zwischen der Turbine und dem Verdichter angeordnet. Dies ermöglicht eine besonders kompakte und bauraumsparende Ausgestaltung des Turboladers mit einem Elektromotor.

Besonders bevorzugt ist der Elektromotor koaxial zu der Turbowelle angeordnet und steht mit dieser in Wirkverbindung. Der Elektromotor kann dabei entlang der Achse des Turboladers angeordnet sein, wodurch eine flexiblere Anordnung des Elektromotors an dem Turbolader ermöglicht wird, bei gleichzeitiger bauraumsparender Ausbildung.

In einer bevorzugten Ausgestaltung der Erfindung ist der Turbolader überströmventilfrei und/oder unverstellbar ausgebildet. Dies ermöglicht einen einfachen und kostengünstigen Aufbau des Turboladers, wobei insbesondere die angeströmten Bauteile bzw. die durch einen Abgasstrom und/oder die Ladeluft angeströmten Bauteile wie die Turbine und/oder der Verdichter ohne Verstellmöglichkeit und dabei kostengünstig herstellbar sind.

In einer weiteren bevorzugten Ausgestaltung der Erfindung ist eine Steuervorrichtung vorgesehen, über welche der Turbolader, insbesondere in Abhängigkeit einer Motorlast, steuer- und regelbar ist. Dies hat den Vorteil, dass sowohl die Energierückgewinnung über die Turbine des Turboladers als auch die Bereitstellung verdichteter Ladeluft für den Antriebsmotor bzw. den Verbrennungsmotor optimal an den jeweiligen Betriebszustand des Verbrennungsmotors und der landwirtschaftlichen Arbeitsmaschine anpassbar sind.

Vorteilhafterweise ist ein erstes Bordnetz, insbesondere mit einer Nennspannung von 48 V, vorgesehen, mit welchem der Turbolader elektrisch über einen ersten Spannungswandler verbunden ist. Das erste Bordnetz ermöglicht dabei den effizienten Betrieb des Turboladers insbesondere mit einer Nennspannung von 48 V, wodurch besonders bei einer Bereitstellung von verdichteter Ladeluft hohe elektrische Energie bereitgestellt werden kann.

Weiterhin ist vorteilhafterweise ein zweites Bordnetz vorgesehen, welches eine niedrigere Nennspannung aufweist als das erste Bordnetz, und welches mit dem ersten Bordnetz über einen zweiten Spannungswandler verbunden ist. Über das zweite Bordnetz, welches insbesondere mit einer Nennspannung von 12 V betreibbar ist, können herkömmliche elektrische Verbraucher genutzt werden, ohne eine kostenintensive Umrüstung auf eine höhere Nennspannung zu benötigen.

In einer weiteren Ausgestaltung der Erfindung ist in dem ersten Bordnetz eine erste Speichervorrichtung und/oder in dem zweiten Bordnetz eine zweite Speichervorrichtung für elektrische Energie vorgesehen. Dies hat den Vorteil, dass eine durch den Turbolader und/oder eine Lichtmaschine der landwirtschaftlichen Arbeitsmaschine generierte elektrische Energie abrufbar gespeichert werden kann. Besonders durch die erste und zweite Speichervorrichtung können beispielsweise voneinander trennbare unabhängige Speichervorrichtungen eine Energieversorgung der jeweiligen Verbraucher in ihren entsprechenden Nennspannungen sicherstellen.

In einer besonders bevorzugten Ausgestaltung der Erfindung ist der Turbolader in einem Lademodus betreibbar, insbesondere bei einer Motorauslastung größer 75%, vorzugsweise größer als 85%. Dies hat den Vorteil, dass die bei der hohen Motorauslastung auftretenden hohen Abgasströme und die darin enthaltene Energie über die Turbine und den Elektromotor zurückgewonnen und in Form von elektrischer Energie speicherbar sind.

In einer weiteren vorteilhaften Ausgestaltung der Erfindung ist der Turbolader in einem Boostmodus betreibbar, wobei der Ladedruck der Ladeluft unabhängig von einer Drehzahl der Turbine regelbar ist. Dies hat den Vorteil, dass dem Verbrennungsmotor jederzeit verdichtete Ladeluft in einer optimalen Menge mit einem entsprechenden Druck zugeführt werden kann, wobei dies unabhängig von dem aktuellen Betriebszustand und einem damit verbundenen Abgasstrom des Verbrennungsmotors regelbar ist.

Nachfolgend wird die Erfindung unter Bezugnahme auf die anliegenden Zeichnungen näher erläutert.

Es zeigt:
- Fig. 1:: eine schematische Seitenansicht einer landwirtschaftlichen Arbeitsmaschine mit einem erfindungsgemäßen Turbolader;
- Fig. 2:: eine schematisch perspektivische Ansicht eines Turboladers an einem Verbrennungsmotor; und
- Fig. 3:: eine schematische Darstellung einer Anordnung des Turboladers an einem Verbrennungsmotor mit einem ersten und zweiten Bordnetz.

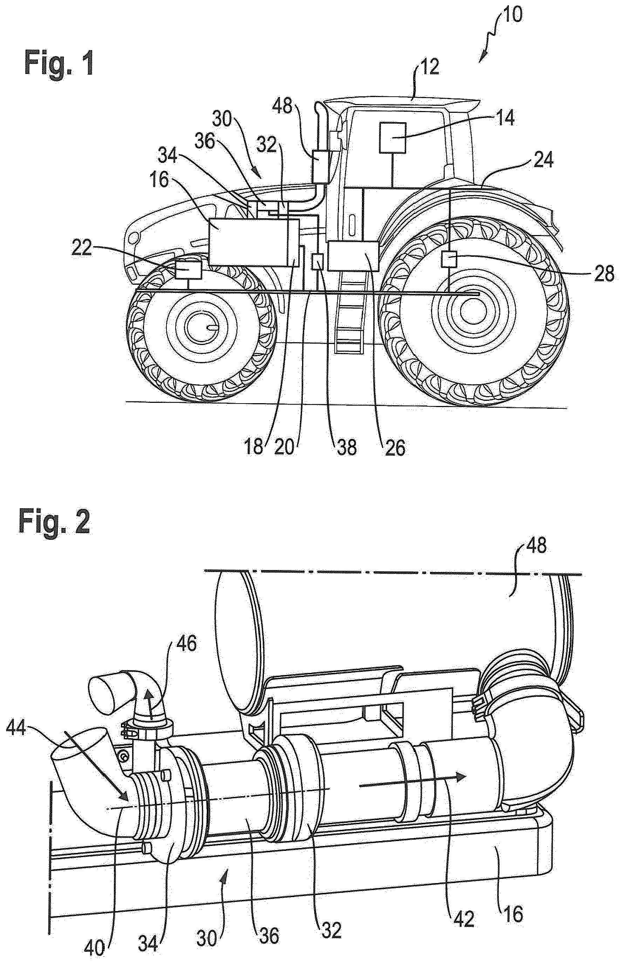

In Fig. 1 ist eine landwirtschaftliche Arbeitsmaschine 10 in Form eines Traktors schematisch in einer Seitenansicht dargestellt, wobei der grundsätzliche Aufbau eines Traktors als dem Fachmann bekannt angesehen wird. Eine landwirtschaftliche Arbeitsmaschine 10 im Sinne der Erfindung kann jedes zur landwirtschaftlichen Arbeit einsetzbare Fahrzeug sein, beispielsweise ein Traktor, ein Frontlader, eine Baumaschine oder eine selbstfahrende Erntemaschine wie ein Mähdrescher oder Feldhäcksler. Der Traktor weist zur Aufnahme eines Bedieners eine geschlossene Fahrerkabine 12 auf, wobei innerhalb der Fahrerkabine 12 üblicherweise zumindest eine Anzeige und Bedienelement 14 zur Bedienung der landwirtschaftlichen Arbeitsmaschine 10 angeordnet sind. Zur Bereitstellung der benötigten Antriebsenergie und elektrischen Energie weist die landwirtschaftliche Arbeitsmaschine 10 einen Verbrennungsmotor 16 auf. Der Verbrennungsmotor 16 kann dabei über einen Starter 18, welcher üblicherweise auch Anlasser oder Lichtmaschine genannt wird, gestartet werden. Der Starter 18 ist hierbei mit einem ersten Bordnetz 20 verbunden, welches zum abrufbaren Speichern elektrischer Energie eine erste Speichervorrichtung 22 aufweist. Das erste Bordnetz 20 kann hierbei mit einer Nennspannung von 48 V betreibbar sein. Hierdurch kann ein effizienter Betrieb elektrischer Verbraucher, welche eine hohe Leistung benötigen, gewährleistet werden.

Weitere elektrische Verbraucher der landwirtschaftlichen Arbeitsmaschine 10, wie beispielsweise die Anzeige- und Bedieneinheit 14, welche üblicherweise mit einer niedrigeren Nennspannung, beispielsweise 12 V, betreibbar sind, können über ein zweites Bordnetz 24 mit elektrischer Energie versorgt werden. Das zweite Bordnetz 24 weist dabei eine zweite Speichervorrichtung 26 auf, in welcher beispielsweise mit einer Nennspannung von 12 V elektrische Energie abrufbar speicherbar ist. Das zweite Bordnetz 24 kann mit dem ersten Bordnetz 20 über einen zweiten Spannungswandler 28 elektrisch verbunden sein. Durch den zweiten Spannungswandler kann dabei die Spannung des ersten Bordnetzes 20 von beispielsweise 48 V in die Nennspannung des zweiten Bordnetzes 24 von beispielsweise 12 V umgewandelt werden. Hierdurch kann eine elektrische Energieversorgung auch bei Ausfall der ersten und/oder zweiten Speichervorrichtung 22, 26 gewährleistet werden. Der Verbrennungsmotor 16 weist einen Turbolader 30 auf, welcher eine durch einen Abgasstrom des Verbrennungsmotors 16 angetriebene Turbine 32 aufweist. Zudem weist der Turbolader 30 einen Verdichter 34 auf, durch welchen Umgebungsluft ansaugbar und als verdichtete Ladeluft für den Verbrennungsmotor bereitstellbar ist.

Gemäß der Erfindung weist der Turbolader 30 einen Elektromotor 36 auf. Dieser Elektromotor ist mit der Turbine 32 und dem Verdichter 34 verbunden, so dass eine Drehbewegung der Turbine 32, welche durch den Abgasstrom des Verbrennungsmotors bewirkt wird, zu einer Drehbewegung des Elektromotors 36 führt, so dass Energie aus dem Abgasstrom in Form von durch den Elektromotor 36 generierte elektrische Energie umgewandelt werden kann. Um die elektrische Energie abrufbar zu speichern, ist der Elektromotor 36 mit dem ersten Bordnetz 20 und einem ersten Speichervorrichtung 22 über einen ersten Spannungswandler 38 elektrisch verbunden. Neben der Energierückgewinnung aus dem Abgasstrom ist zudem durch den Elektromotor 36 der Verdichter 34 antreibbar, so dass unabhängig von einem Abgasstrom und einer Drehzahl der Turbine 32 verdichtete Ladeluft mit einem gewünschten Ladedruck dem Verbrennungsmotor 16 zugeführt werden kann. Dies ermöglicht eine Steigerung der Effizienz des Verbrennungsmotors 16.

Der Elektromotor 36 (Fig. 2) ist dabei zwischen einer Turbine 32 und dem Verdichter 34 des Turboladers 30 angeordnet. Der Elektromotor 36 ist hierbei koaxial zu einer Rotationsachse 40 des Turboladers 30 angeordnet, wodurch eine bauraumsparende Anordnung des Elektromotors 36 an dem Turbolader 30 ermöglicht wird. Der Turbolader 30 ist dabei durch den Abgasstrom des Verbrennungsmotors 16 und/oder durch den Elektromotor 36 antreibbar. Hierdurch kann Umgebungsluft 44 angesaugt und verdichtet werden, und als verdichtete Ladeluft 46 an den Verbrennungsmotor 16 abgegeben werden. Der Abgasstrom 42 des Verbrennungsmotors 16 wird nach dem Austritt aus der Turbine 32 einer Abgasnachbehandlungsvorrichtung 48 zugeleitet, um Schadstoffe zu reduzieren, bevor der Abgasstrom an die Umgebung abgegeben wird.

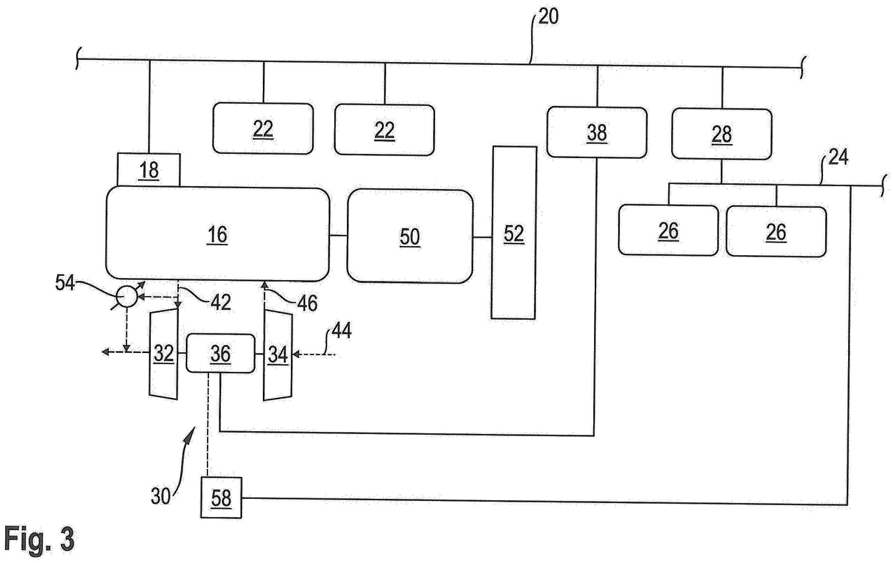

Eine schematische Anordnung des Verbrennungsmotors 16 mit dem Turbolader 30 sowie einem ersten Bordnetz 20 und einem zweiten Bordnetz 24 sind in Fig. 3 dargestellt. Der Verbrennungsmotor 16 ist hierbei über ein Getriebe 50 mit einer Hinterachse 52 der landwirtschaftlichen Arbeitsmaschine 10 verbunden. Der Verbrennungsmotor 16 ist über einen Starter 18, welcher mit dem ersten Bordnetz 20, welches beispielsweise eine Nennspannung von 48 V aufweist, mit einer elektrischen ersten Speichervorrichtung 22 verbunden, so dass der Verbrennungsmotor 16 über den Starter 18 gestartet werden kann. Dem Verbrennungsmotor 16 ist weiterhin ein Turbolader 30 zugeordnet, welcher über eine Turbine 32 verfügt, die durch einen Abgasstrom 42 des Verbrennungsmotors 16 antreibbar ist, wodurch ein mit der Turbine wirkverbundener Verdichter 34 des Turboladers 30 antreibbar ist. Bei besonders hoher Belastung des Verbrennungsmotors 16 kann der Abgasstrom 42 zumindest teilweise über ein Überströmventil 54 an der Turbine 32 vorbei abgeleitet werden. Hierdurch kann eine Überlastung, beispielsweise durch zu hohe Temperaturen und/oder Drehzahlen, des Turboladers 30 vermieden werden.

Zwischen der Turbine 32 und dem Verdichter 34, welche über eine Turbowelle 56 miteinander drehbar verbunden sind, ist koaxial zu der Drehachse 40 der Turbowelle 56 ein Elektromotor 36 angeordnet. Der Elektromotor 36 ist über die Turbine 32 in einem Lademodus M_{L} antreibbar, wodurch elektrische Energie durch den Elektromotor 36 als Generator bereitgestellt werden kann. Zur abrufbaren Speicherung der elektrischen Energie ist der Elektromotor 36 über einen ersten Spannungswandler 38 mit dem ersten Bordnetz 20 elektrisch verbunden. Über das erste Bordnetz 20 und eine daran angeschlossene erste Speichervorrichtung 22 kann der Elektromotor 36 auch elektrische Energie aus dem ersten Bordnetz 20 abrufen, um beispielsweise den Verdichter 34 unabhängig von einem Abgasstrom 42 des Verbrennungsmotors 16 anzutreiben. Hierdurch kann unabhängig von einem Abgasstrom 42 des Verbrennungsmotors 16 Umgebungsluft 44 angesaugt und mit dem benötigten Ladedruck als verdichtete Ladeluft 46 dem Verbrennungsmotor 16 zugeführt werden. Der Turbolader 30 und insbesondere der Elektromotor 36 sind dabei über eine Steuervorrichtung 58 steuer- und regelbar.

Die Steuervorrichtung 58 ist elektrisch mit dem zweiten Bordnetz 24 verbunden, welches eine niedrigere Nennspannung als das erste Bordnetz 20 beispielsweise von 12 V bereitstellt. Das zweite Bordnetz 24 weist dabei eine zweite Speichervorrichtung 26 auf und ist über einen zweiten Spannungswandler 28 mit dem ersten Bordnetz 20 elektrisch verbunden. Durch die Steuervorrichtung 58 kann der Elektromotor 36 derart angesteuert werden, dass beispielsweise eine Trägheit des Turboladers 30 kompensiert werden kann und/oder ein sogenanntes Turboloch, das heißt ein verzögertes Ansprechen des Turboladers 30, ausgeglichen werden kann. Weiterhin ist besonders vorteilhaft, dass bei einer sehr hohen Motorbelastung, beispielsweise von mehr als 75% oder mehr als 85%, der Abgasstrom 42 des Verbrennungsmotors 16 nicht mehr über das Überströmventil 54 abgeleitet werden muss, sondern durch den Elektromotor 36 in speicherbare elektrische Energie gewandelt werden kann. Dies ist besonders bei landwirtschaftlichen Arbeitsmaschinen interessant, die über einen längeren Zeitraum schwere Arbeiten verrichten und deren Verbrennungsmotor 16 über einen längeren Zeitraum eine entsprechende hohe Motorlast von mehr als 75% oder 85% aufweist. Die rückgewinnbare Energie über den erfindungsgemäßen Turbolader 30 kann dabei ungefähr 5% der maximalen Leistung des Verbrennungsmotors 16 betragen. Das Überströmventil 54 kann beispielsweise genutzt werden, wenn die Speichervorrichtungen 22, 26 vollständig geladen sind oder wenn es zu einer Störung des Turboladers 30 oder des Elektromotors 36 kommt.

### Bezugszeichenliste

- 10: landwirtschaftliche Arbeitsmaschine
- 12: Fahrerkabine
- 14: Anzeige- und Bedienelement
- 16: Verbrennungsmotor
- 18: Starter
- 20: erstes Bordnetz
- 22: erste Speichervorrichtung
- 24: zweites Bordnetz
- 26: zweite Speichervorrichtung
- 28: zweiter Spannungswandler
- 30: Turbolader
- 32: Turbine
- 34: Verdichter
- 36: Elektromotor
- 38: erster Spannungswandler
- 40: Drehachse
- 42: Abgasstrom
- 44: Umgebungsluft
- 46: Ladeluft
- 48: Abgasnachbehandlungsvorrichtung
- 50: Getriebe
- 52: Hinterachse
- 54: Überströmventil
- 56: Turbowelle
- 58: Steuervorrichtung

- M_{L}: Lademodus
- M_{B}: Boostmodus

## Patentansprüche

1. Landwirtschaftliche Arbeitsmaschine mit einem Verbrennungsmotor (16), einem dem Verbrennungsmotor (16) zugeordneten Turbolader (30) mit einer Turbine (32) und einem Verdichter (34), welche über eine Turbowelle (56) drehbar miteinander verbunden sind, wobei die Turbine (32) durch einen Abgasstrom (42) des Verbrennungsmotors (16) antreibbar ist, und wobei durch den Verdichter (34) verdichtete Ladeluft (46) für den Verbrennungsmotor (16) bereitstellbar ist,
**dadurch gekennzeichnet, dass** der Turbolader (30) einen Elektromotor (36) aufweist, welcher als Antrieb und/oder Generator des Turboladers (30) betreibbar ist.

2. Arbeitsmaschine nach Anspruch 1, **dadurch gekennzeichnet, dass** der Elektromotor (36) koaxial zu der Turbowelle (56) angeordnet ist und mit dieser in Wirkverbindung steht.

3. Arbeitsmaschine nach Anspruch 1 oder 2, **dadurch gekennzeichnet, dass** der Elektromotor (36) zwischen der Turbine (32) und dem Verdichter (34) angeordnet ist.

4. Arbeitsmaschine nach einem der vorherigen Ansprüche, **dadurch gekennzeichnet, dass** der Turbolader (30) überströmventilfrei und/oder unverstellbar ausgebildet ist.

5. Arbeitsmaschine nach einem der vorherigen Ansprüche, **dadurch gekennzeichnet, dass** eine Steuervorrichtung (58) vorgesehen ist, über welche der Turbolader (30) steuer- und regelbar ist.

6. Arbeitsmaschine nach einem der vorherigen Ansprüche, **dadurch gekennzeichnet, dass** ein erstes Bordnetz (20), insbesondere mit einer Nennspannung von 48 V, vorgesehen ist, mit welchem der Turbolader (30) elektrisch über einen ersten Spannungswandler (38) verbunden ist.

7. Arbeitsmaschine nach einem der vorherigen Ansprüche, **dadurch gekennzeichnet, dass** ein zweites Bordnetz (24) vorgesehen ist, welches eine niedrigere Nennspannung aufweist als das erste Bordnetz (20), und welches mit dem ersten Bordnetz (20) über einen zweiten Spannungswandler (28) verbunden ist.

8. Arbeitsmaschine nach einem der vorherigen Ansprüche, **dadurch gekennzeichnet, dass** in dem ersten Bordnetz (20) eine erste Speichervorrichtung (22) und/oder in dem zweiten Bordnetz (24) eine zweite Speichervorrichtung (26) für elektrische Energie vorgesehen ist.

9. Arbeitsmaschine nach einem der vorherigen Ansprüche, **dadurch gekennzeichnet, dass** der Turbolader (30) in einem Lademodus (M_{L}) betreibbar ist, insbesondere bei einer Motorlast größer 75%, vorzugsweise größer als 85%.

10. Arbeitsmaschine nach einem der vorherigen Ansprüche, **dadurch gekennzeichnet, dass** der Turbolader (30) in einem Boostmodus (M_{B}) betreibbar ist, wobei der Ladedruck der Ladeluft (46) unabhängig von einer Drehzahl der Turbine (32) regelbar ist.
